(19) Europäisches Patentamt / European Patent Office / Office européen des brevets

(11) **EP 2 198 472 B1**

(12) **FASCICULE DE BREVET EUROPEEN**

(45) Date de publication et mention
de la délivrance du brevet:
**01.05.2013 Bulletin 2013/18**

(21) Numéro de dépôt: **08804094.4**

(22) Date de dépôt: **12.09.2008**

(51) Int Cl.:
*H01M 2/04* *(2006.01)*   *H01M 2/10* *(2006.01)*
*H01M 2/20* *(2006.01)*   *H01G 11/22* *(2013.01)*

(86) Numéro de dépôt international:
**PCT/EP2008/062129**

(87) Numéro de publication internationale:
**WO 2009/034163 (19.03.2009 Gazette 2009/12)**

(54) **MODULE POUR ENSEMBLES DE STOCKAGE D'ENERGIE ELECTRIQUE A BARRETTE DE LIAISON PLATE**

MODULE FÜR ELEKTRISCHE ENERGIESPEICHERBAUGRUPPEN MIT EINEM FLACHEN VERBINDUNGSSTREIFEN

MODULE FOR ELECTRICAL ENERGY STORAGE ASSEMBLIES HAVING A FLAT CONNECTING STRIP

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.09.2007 FR 0706423**

(43) Date de publication de la demande:
**23.06.2010 Bulletin 2010/25**

(73) Titulaire: **Batscap**
**29500 Ergué-Gabéric (FR)**

(72) Inventeurs:
• **CAUMONT, Olivier**
**F-29000 Quimper (FR)**
• **DEPOND, Jean-Michel**
**F-29000 Quimper (FR)**
• **JUVENTIN-MATHES, Anne-Claire**
**F-29000 Quimper (FR)**

(74) Mandataire: **Regimbeau**
**20, rue de Chazelles**
**75847 Paris Cedex 17 (FR)**

(56) Documents cités:
**EP-A- 1 450 422    WO-A-2006/121006**
**FR-A- 2 771 218    FR-A- 2 871 615**
**FR-A- 2 894 381    US-A- 6 063 525**

**Description**

La présente invention concerne le domaine technique général des ensembles de stockage d'énergie électrique.

Plus particulièrement l'invention concerne le domaine des modules comprenant au moins deux ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

**PRESENTATION GENERALE DE L'ART ANTERIEUR**

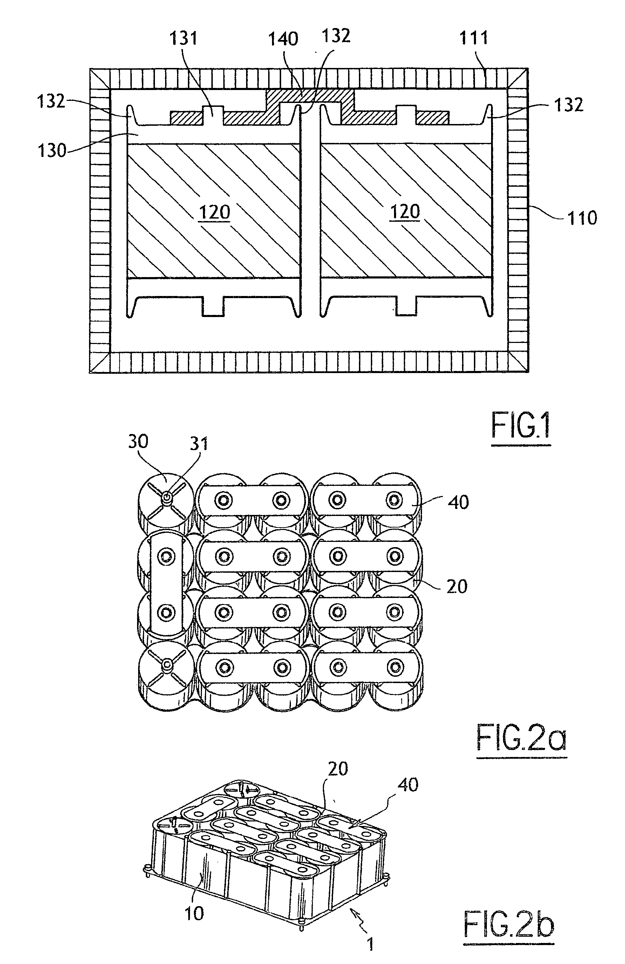

On connaît des modules tels que représentés à la figure 1, comprenant un boîtier 110 dans lequel sont disposés plusieurs ensembles de stockage d'énergie électrique 120 reliés par des moyens de connexion.

Lorsque le module comprend plus de deux ensembles de stockage 120, les ensembles de stockage 120 sont reliés deux à deux alternativement au niveau de leurs extrémités supérieures et inférieures.

Comme illustré schématiquement à la figure 1, les moyens de connexion permettant la connexion électrique de deux ensembles de stockage 120 adjacents comprennent deux couvercles 130 et une barrette 140.

Chaque couvercle 130 est destiné à coiffer un ensemble de stockage 120 respectif de sorte à être connecté électriquement à celui-ci.

Chaque couvercle 130 comprend en outre une borne de connexion 131 apte à venir en contact avec un alésage traversant de la barrette 140, de sorte à relier électriquement deux ensembles de stockage 120 adjacents.

La connexion des couvercles 130 avec la barrette de liaison 140 de deux ensembles de stockage 120 adjacents est réalisée soit par emmanchement en force de la barrette 140 sur les bornes de connexion 131 des couvercles 130, soit par soudure laser, ou autre, bord à bord entre la barrette 140 et les bornes 131, soit les deux combinés.

Ces deux moyens de connexion électrique nécessitent d'une part des tolérances serrées des bornes et barrettes, d'autre part un alignement précis des pièces entre elles pour assurer en finale la réalisation d'un module de qualité, d'où un coût de réalisation important. Plus particulièrement, les couvercles 130 sont assemblés au tube entourant l'élément par roulage ou sertissage. Pour permettre un tel assemblage, chaque couvercle 130 comprend sur la périphérie de sa face en contact avec la barrette 140, un bord circulaire 132 - dit « débordant » - s'étendant axialement vers l'extérieur du couvercle.

La présence de ce bord périphérique débordant 132 sur chacune des faces des couvercles 130 en contact avec la barrette 140 nécessite la mise en oeuvre de l'une ou l'autre des solutions ci-dessous :

- utiliser une barrette 140 présentant une géométrie complexe pour enjamber les débordements 132 des couvercles 130 connectés :

  cette solution induit une diminution de la surface de contact entre la barrette de liaison 140 et le capot 111 du boîtier 110, par l'intermédiaire ou non d'un matériau intermédiaire. Ceci provoque des difficultés dans la gestion du refroidissement d'un tel module.

- utiliser une barrette de liaison 140 plate (s'étendant dans un plan principal) surélevée par rapport au débordement grâce à des pions (s'étendant perpendiculairement au plan principal) et destiné à venir en contact avec les couvercles : Le document EP 1 450 422 décrit un module de batteries mettant en oeuvre cette solution. Le module comprend une pluralité de cellules cylindriques. Une des faces de chaque cellule est coiffée par une plaque d'étanchéité destinée à être connectée à une plaque de connexion pour la connexion de deux cellules adjacentes

- utiliser une barrette de liaison plate surélevée par rapport au débordant du couvercle, venant se connecter sur une borne 131 plus haute que le débordant, mais sans ajouter de pions, ce qui implique que l'outillage doit maintenir en position pendant l'opération de soudage, soit que la barrette doit être emmanchée à force sur la borne 131 pour tenir en place pendant l'opération de soudage.

Ces deux dernières solutions induisent une diminution de la surface de contact entre la barrette de liaison 140 et chaque couvercle 130, puisque le contact est alors limité à l'épaisseur de la barrette et/ou la largeur des pions. Ceci provoque des difficultés dans l'évacuation thermique, dans la maîtrise de la résistance série, de l'usure prématurée des ensembles de stockage.

Un autre désavantage de ces trois types de réalisation est la difficulté d'obtenir des modules où les éléments sont correctement alignés, et où les barrettes sont parallèles à la surface des couvercles.

Un but de l'invention est de proposer un module permettant de pallier au moins l'un des inconvénients précités.

**PRESENTATION DE L'INVENTION**

A cet effet on prévoit un module selon la revendication 1.

Ainsi, la présence de cordons de soudure et l'absence de bords circulaires débordant aux périphéries des faces des couvercles combinés à l'utilisation de barrettes de liaison planes permettent de réduire le coût de fabrication des modules. Cette combinaison permet également de maximiser la surface de contact entre la barrette et les couvercles d'une part, ce qui minimise la résistance série $R_s$, et entre la barrette et le capot (avec ou sans matériau intermédiaire) d'autre part, ce qui facilite les échanges thermiques entre l'intérieur et l'extérieur du module.

Des aspects préférés mais non limitatifs du module selon l'invention sont les suivants, pris seuls ou en combinaisons :

- il comprend un boîtier (10) dans lequel sont disposés les ensembles de stockage (20).
- chaque couvercle (30) comprend une borne de connexion (31) sur sa face externe destinée à être en contact électrique avec une extrémité de la barrette (40) au niveau d'un alésage traversant de la barrette (40).
- les deux ensembles de stockage (20) et les cordons de soudure (50, 50') sont symétriques par rapport à un plan médian (A-A') disposé à mi-distance des axes de révolution des ensembles de stockage (20).
- les cordons de soudure (50, 50') des deux ensembles de stockage (20) sont disposés en regard l'un de l'autre.
- les cordons de soudure (50, 50') des deux ensembles de stockage (20) sont disposés à l'opposé l'un de l'autre.
- la barrette (40) est soudée sur chaque face d'un couvercle (30) le long d'au moins un cordon de soudure (50, 50').
- chaque ensemble de stockage d'énergie (20) est connecté électriquement à la barrette (40) le long d'au moins deux cordons de soudure (50, 51 et 50', 51').
- les cordons de soudure (50, 51 et 50', 51') sont symétriques par rapport à un plan (B-B') passant par les axes de révolution des ensembles de stockage d'énergie (20).
- chaque cordon de soudure (50, 51 et 50', 51') est de forme en quart de cercle, un premier cordon de soudure (50, 50') s'étendant à la périphérie du couvercle (30) et un deuxième cordon de soudure (51, 51') s'étendant le long d'un rayon médian du couvercle (30).
- les deux cordons de soudure (50, 51 et 50', 51') sont rectilignes et s'étendent parallèlement au plan de symétrie (B-B') passant par les axes de révolution des deux ensembles de stockage (20).
- les deux cordons de soudure (50, 51 et 50', 51') sont rectilignes et s'étendent perpendiculairement au plan B-B' de symétrie passant par les axes de révolution des ensembles de stockage.
- les deux cordons de soudure (50, 51 et 50', 51') sont rectilignes et forment un angle avec le plan de symétrie (B-B') passant par les axes de révolution des deux ensembles de stockage (20).

- chaque ensemble de stockage (20) comprend un élément bobiné soudé au couvercle (30) le long d'au moins deux génératrices de soudure (60), les cordons de soudure (50, 51 et 50', 51') étant disposés de sorte à ne pas chevaucher les génératrices de soudure (60).
- chaque ensemble de stockage (20) comprend au moins quatre génératrices de soudures (60) s'étendant radialement, chaque génératrice (60) formant un angle par rapport au plan de symétrie passant par les axes de révolution des ensembles de stockage (20).
- les génératrices de soudure (60) s'étendant radialement sont symétriques deux à deux par rapport au plan de symétrie (B-B') passant par les axes de révolution des ensembles de stockage (20).
- les génératrices de soudure (60) s'étendent le long de diamètres des couvercles (30).
- les génératrices de soudure (60) sont perpendiculaires l'une par rapport à l'autre de sorte à délimiter des quadrants (61, 62, 63, 64).
- pour chaque ensemble de stockage (20), les cordons de soudure (50, 51 et 50', 51') sont disposés dans un quadrant (61).
- les autres quadrants (62, 63, 64) comprennent chacun au moins un autre cordon de soudure (52, 53, 54).
- les autres soudures (52, 53, 54) sont en forme de quart de cercle.
- les autres cordons de soudure (52, 53, 54) sont rectilignes.
- au moins deux autres cordons s'étendent perpendiculairement au plan passant par les axes de révolution des ensembles de stockage.
- l'un des autres cordons de soudure s'étend dans le plan passant par les axes de révolution des ensembles de stockage.
- au moins trois autres cordons s'étendent perpendiculairement au plan passant par les axes de révolution des ensembles de stockage.
- chaque barrette comprend une superposition de feuillards métalliques.
- les feuillards sont soudables par résistance.
- chaque feuillard est en aluminium.
- chaque barrette est en aluminium.
- la barrette est soudée laser par transparence aux couvercles.
- le soudage de la barrette est effectué au travers de lamages.
- la barrette est soudée au couvercle par brasage diffusion sur tout ou partie des surfaces de contact entre la barrette et les couvercles.
- il comprend des éléments de dissipation thermique entre le capot du boîtier et la barrette et les couvercles de sorte à connecter thermiquement tout en isolant électriquement le boîtier et les ensembles de stockage d'énergie.

- les éléments de dissipation thermique entre les éléments et la paroi du module comprennent une couche d'élastomère.

## PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :

- la figure 1 illustre un mode de réalisation d'un module de l'art antérieur,
- Les figures 2, 2a, 2b illustrent un module selon l'invention,
- La figure 3 illustre un mode de réalisation de cordons de soudure,
- Les figures 4a à 4h et 5 illustrent d'autres modes de réalisation de cordons de soudure,
- La figure 6 illustre un autre mode de réalisation des cordons et des points de soudure d'une barrette du module selon l'invention.

## DESCRIPTION DE L'INVENTION

On va maintenant décrire différents modes de réalisation du module selon l'invention en référence aux figures. Dans ces différentes figures, les éléments équivalents du module portent les mêmes références numériques.

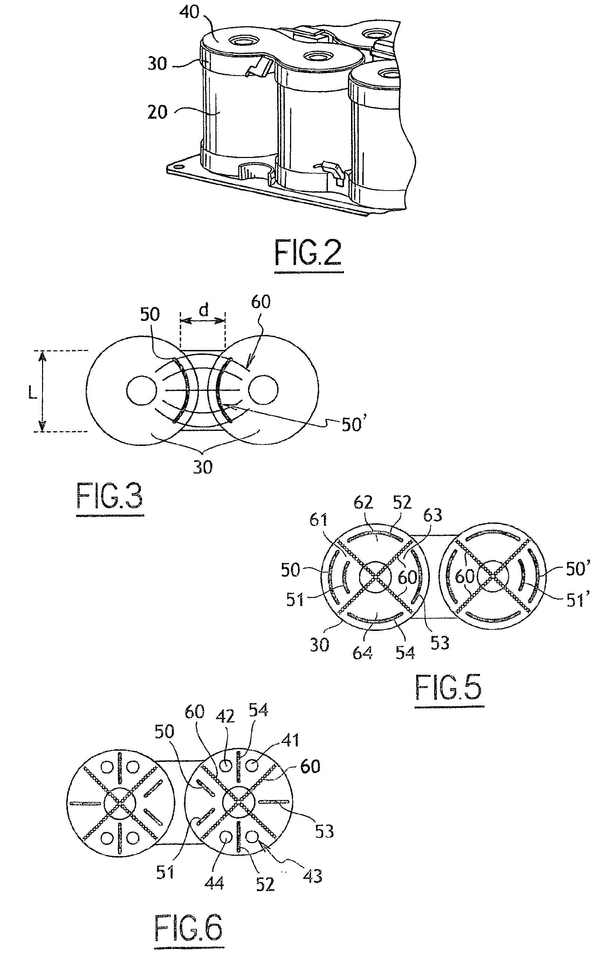

Comme illustré à la figure 2b, le module 1 comprend un boîtier 10 dans lequel est disposé au moins deux ensembles de stockage d'énergie électrique 20.

Les ensembles de stockage 20 sont de forme globalement cylindrique. Les ensembles de stockage 20 sont disposés côte à côte dans le boîtier 10. En d'autres termes, les axes de révolution des ensembles de stockage 20 sont parallèles. Dans le mode de réalisation illustré aux figures 2a et 2b, les ensembles de stockage 20 sont disposés de sorte que leurs axes de révolution sont perpendiculaires à la paroi inférieure du boîtier 10. Dans d'autres variantes non représentées ici, les ensembles de stockage peuvent être de forme parallélépipédique, carrée, ovale, hexagonale, sans que cela change les principes généraux de l'invention.

Chaque ensemble de stockage 20 comprend une première face coiffée par un couvercle 30 connecté électriquement à l'ensemble de stockage d'énergie 20 le long de génératrices de soudure.

Chaque couvercle peut ou non comprendre une borne de connexion au centre de sa face destinée à venir en contact avec la barrette de liaison.

Une particularité du module selon l'invention est que :

i) la barrette de liaison 40 et la face de chaque couvercle 30 destinée à venir en contact avec la barrette 40 sont planes, et que
ii) la barrette 40 et les couvercles 30 sont connectés par soudure par transparence en formant des cordons de soudures le long des amincissements d'épaisseur des barrettes.

On entend, dans le cadre de la présente invention, par « *face plane* » d'un couvercle, une face généralement plate, comprenant ou non une borne de connexion. En d'autres termes, on entend, par « *face plane* » d'un couvercle, une face de couvercle dont la périphérie ne comprend pas de bord s'étendant vers l'extérieur parallèlement à l'axe de révolution de l'ensemble de stockage.

On entend par soudage par transparence, le fait de souder deux pièces superposées, par un faisceau d'énergie traversant la pièce supérieure à souder soit au travers d'une partie amincie de celle-ci, si la pièce est épaisse, soit au travers de toute son épaisseur, si la pièce est mince. La soudure par transparence s'oppose à la soudure bord à bord, qui consiste à souder deux pièces positionnées bord à bord par un faisceau d'énergie non traversant, mais ajusté à la forme des bords à souder, et positionné avec précision à l'interface des bords à souder.

La combinaison de ces caractéristiques présente les avantages suivants :

- cela permet de diminuer le coût de fabrication de tels modules,
- cela permet de maximiser la surface de contact entre la barrette et le couvercle d'une part (ce qui permet de diminuer la résistance série du module) et entre la barrette et le capot du boîtier d'autre part (ce qui permet de maximiser les transferts thermiques entre la barrette et le boîtier),

- cela améliore la rigidité de l'assemblage constitué des ensembles de stockage, des couvercles et des barrettes,
- cela améliore également la tenue en vibration de l'assemblage constitué des ensembles de stockage, des couvercles et des barrettes,
- cela permet également de diminuer la hauteur de l'assemblage éléments/barrettes et donc de minimiser le volume global du module, augmentant ainsi l'énergie et la capacité volumique globale du module.

Par ailleurs, l'utilisation d'une barrette 40 plate et de couvercles 30 plats permet également d'utiliser au maximum la surface de contact entre la barrette 40 et le couvercle 30 pour réaliser des cordons de soudure dont la longueur et la position sont choisies en fonction des applications et des paramètres de module désirés.

En référence à la figure 3, un exemple de disposition et de forme de cordons de soudure est illustré.

Chaque extrémité de la barrette de liaison est soudée sur une face d'un couvercle 30 respectif le long d'un cordon de soudure 50, 50'.

Chaque cordon de soudure 50, 50' est de forme en quart de cercle le long de la périphérie du couvercle 30.

Les cordons de soudure 50, 50' sont disposés en regard l'un de l'autre. Ceci permet de minimiser la résistance série de la liaison couvercle/barrette/couvercle.

En effet, comme rappelé ci-dessous, la résistance ohmique R de la barrette de liaison 40 dans la zone centrale située entre deux cordons de soudure 50, 50' les plus proches, chaque cordon de soudure 50, 50' reliant la barrette 40 à un couvercle unitaire 30 différent est donné par :

$$R = \frac{\rho \times d}{S}$$

Où : - d est la distance entre les deux cordons de soudure en regard l'un de l'autre,
- S est la section de la barrette située entre les deux cordons de soudure,
(S = L x e, avec e l'épaisseur de la barrette et L la largeur de la barrette),
- ρ est la résistivité électrique du matériau de la barrette.

Pour minimiser la résistance ohmique R de la liaison couvercle/barrette/couvercle, on peut diminuer la distance « *d* » entre les cordons de soudure 50, 50' vers un minimum et/ou maximiser la longueur des cordons de soudure. En effet, dans le cas d'une liaison par soudure, on estime que 95% du courant passe par les cordons de soudure 50, 50' et seulement 5% par contact des pièces entre elles, hors cordon.

Il faut donc trouver un compromis entre longueur et nombre de cordons de soudure 50, 50' à réaliser, et nombre d'opérations de soudure à réaliser.

La forme en quart de cercle de chaque cordon de soudure et sa position à la périphérie du couvercle permettent de maximiser la longueur des cordons de soudure. Ceci permet de faciliter le passage du courant (le long de lignes de champs 60) d'un ensemble de stockage à l'autre et donc de réduire la résistance ohmique de la barrette.

La minimisation du nombre de cordons de soudure 50, 50' par couvercle, permet de réduire le coût et le temps de fabrication.

Bien entendu, d'autres modes de réalisation des cordons de soudure peuvent être envisagés selon l'application.

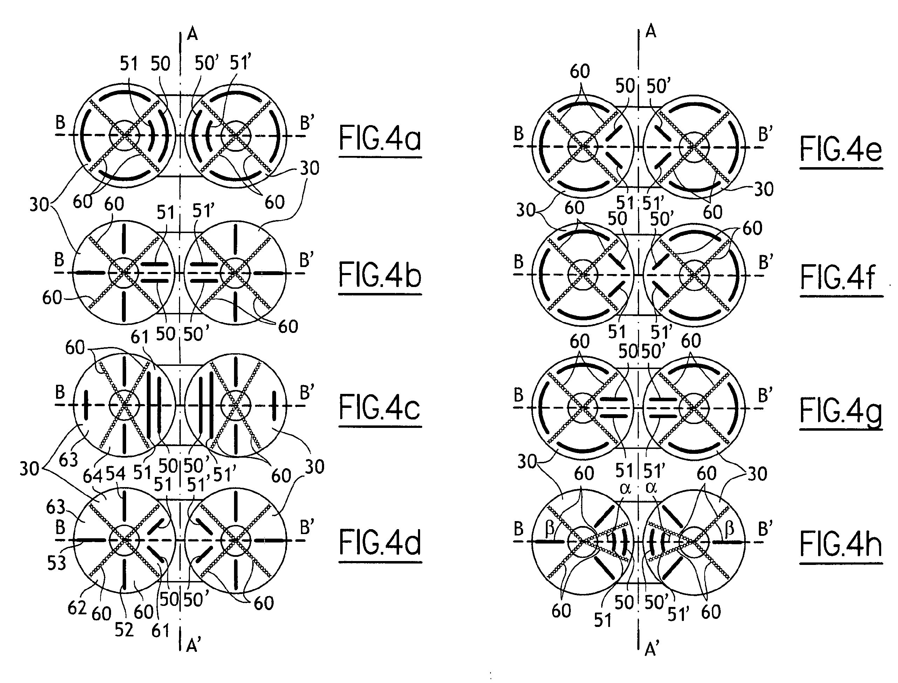

En référence aux figures 4a à 4h et 5, on a illustré différentes variantes de cordons de connexion.

Deux ensembles de stockage sont disposés symétriquement par rapport à un plan médian A-A' situé à mi-distance entre les axes de révolution des deux ensembles de stockage 20.

Chaque couvercle 30 est connecté électriquement à une extrémité respective de la barrette (non représentée) au niveau d'au moins deux cordons de soudure 50, 51 et 50', 51'.

Ces cordons de soudure 50, 51 et 50', 51' seront appelés dans la suite *« cordons de soudure principaux »*, en référence au fait que le passage du courant entre deux ensembles de stockage se fait principalement dans la zone qu'ils délimitent. Ceci est lié à différents paramètres tel que la position de ces cordons de soudure principaux l'un par rapport à l'autre sur le couvercle ou encore la forme de ces cordons de soudure principaux.

La forme des cordons de soudure principaux 50, 51 et 50', 51' est variable.

Selon une variante (illustrée aux figures 4a et 5), les cordons de soudure principaux 50, 51 et 50', 51' sont de forme en quart de cercle. Ceci permet de maximiser la longueur des cordons de soudure.

Selon une autre variante (illustrée à la figure 4h), les cordons de soudure principaux 50, 51 et 50', 51' sont de forme en portion de cercle.

Selon une autre variante encore (illustrée aux figures 4b à 4g), les cordons de soudure principaux 50, 51 et 50', 51' sont de forme rectiligne. Ceci permet de faciliter l'opération de soudure de la barrette sur les couvercles, une soudure rectiligne étant plus simple à réaliser qu'une soudure courbe.

Les cordons de soudure principaux 50, 51 et 50',51' des couvercles sont symétriques par rapport au plan médian A-A'. En d'autres termes les cordons de soudure principaux 50, 51 de l'un des couvercles sont symétriques des cordons de soudure principaux 50',51' de l'autre couvercle par rapport au plan médian A-A'. Par ailleurs, les cordons de soudure principaux 50, 51 et 50', 51' sont symétriques par rapport à un plan B-B' passant par les axes de révolution des ensembles de stockage 20.

Ceci permet un passage homogène du courant entre les deux ensembles de stockage 20.

Dans le mode de réalisation illustré à la figure 5, les cordons de soudure principaux 50, 51 et 50',51' sont disposés à l'opposé l'un de l'autre sur leur couvercle 30 respectif.

Ceci permet de mieux répartir le passage du courant sur toute la surface de la barrette de liaison, ce qui permet d'homogénéiser la distribution du courant dans la totalité de l'enroulement de l'élément de stockage 20, ce qui peut augmenter la durée de vie du module en évitant de surcharger de façon dissymétrique l'enroulement précité et en tout état de cause, réduit l'usure de la barrette de liaison 40.

Dans les modes de réalisation illustrés aux figures 4a à 4h, les cordons de soudure principaux 50, 51 et 50', 51' sont disposés en regard l'un de l'autre.

Ceci permet de diminuer la résistance ohmique de la barrette 40 en minimisant la distance entre les cordons de soudure principaux 50 et 50', et 51 et 51'.

Chaque couvercle 30 peut comprendre ou non une borne de connexion 31 sur sa face externe destinée à être en contact électrique avec une extrémité de la barrette 40 au niveau d'un alésage traversant de la barrette 40. La présence d'une borne de connexion 31 permet de faciliter le positionnement de la barrette 40 sur les couvercles 30. L'absence de borne de connexion 31 sur les couvercles 30 permet de diminuer le volume total du module, et donc augmente la puissance volumique du module.

La position des cordons de soudure principaux 50, 51 et 50', 51' sur les couvercles 30 peuvent varier.

Dans le cas de cordons de soudure en quart de cercle, ceux-ci peuvent être disposés : l'un à la périphérie et l'autre dans une zone médiane du couvercle (figures 4a et 5).

Dans le cas de cordons de soudure principaux 50, 51 et 50', 51' rectilignes, ceux-ci peuvent s'étendre parallèlement au plan B-B' passant par les axes de révolution des deux ensembles de stockage (figures 4b, 4g).

Ceci permet de diminuer la résistance ohmique de la barrette 40 (et donc la production de chaleur par effet Joule de la barrette). Toutefois, dans ce cas, le courant circule principalement le long des cordons de soudure principaux 50, 51 et 50', 51', ce qui peut provoquer un échauffement local de la barrette 40 le long des cordons de soudure principaux 50, 51 et 50', 51'.

Les cordons de soudure principaux 50, 51 et 50', 51' rectilignes peuvent également s'étendre perpendiculairement au plan B-B' s'étendant entre les axes de révolution des ensembles de stockage 20 (figure 4c).

Ceci permet d'éviter les risques de détérioration liés à l'échauffement local mentionné ci-dessus en répartissant le passage du courant d'un ensemble de stockage 20 à l'autre sur toute la largeur de la barrette 40.

Les cordons de soudure principaux 50, 51 et 50', 51' peuvent également présenter un angle avec le plan B-B' passant par les axes de révolution des ensembles de stockage 20 (figures 4d à 4f).

Ils peuvent être disposés radialement, c'est-à-dire à proximité l'un de l'autre au niveau du centre du couvercle 30, la distance entre les cordons de soudure principaux 50, 51 et 50', 51' augmentant au fur et à mesure que l'on s'approche de la périphérie du couvercle 30 (figures 4d et 4e).

Ceci permet de favoriser le passage du courant à la périphérie de la barrette 40.

Ils peuvent également être positionnés à distance l'un de l'autre au niveau du centre du couvercle 30, la distance entre les cordons de soudure principaux 50, 51 et 50', 51' diminuant au fur et à mesure que l'on s'approche de la périphérie du couvercle 30 (figure 4f).

Ceci permet de favoriser le passage du courant par le centre de la barrette 40.

Comme illustré aux figures 4a à 4h et 5, le couvercle 30 est par ailleurs soudé aux ensembles de stockage 20 le long de génératrices de soudure 60.

Suivant le mode de réalisation, chaque ensemble de stockage peut être soudé à un couvercle respectif le long de deux génératrices de soudure 60, ou plus de deux génératrices de soudure 60.

Dans certains modes de réalisation tel qu'illustré à la figure 4h, chaque couvercle 30 est soudé à un ensemble de stockage 20 respectif le long de quatre génératrices de soudure 60 s'étendant radialement, chaque génératrice de soudure 60 présentant un angle avec le plan B-B' s'étendant entre les axes de révolution des ensembles de stockage 20. Plus particulièrement, les génératrices de soudure 60 destinées à venir en regard de l'ensemble de stockage 20 adjacent à connecter électriquement présente un angle α avec le plan B-B' plus petit que l'angle β entre ce même plan B-B' et les génératrices les plus éloignées de l'ensemble de stockage 20 adjacent à connecter.

Ceci permet de faciliter le passage du courant d'un ensemble de stockage 20 à l'autre et d'augmenter la solidité de la liaison entre l'ensemble de stockage 20 et son couvercle 30 associé dans cette zone de passage du courant.

Dans d'autres modes de réalisation illustrés aux figures 4a à 4g et 5, chaque couvercle est soudé à un ensemble de stockage respectif le long de deux génératrices de soudure 60 s'étendant le long de diamètres du couvercle 30 de sorte à délimiter des portions de la circonférence du couvercle.

Ceci permet de simplifier l'opération de soudure des couvercles 30 sur les ensembles de stockage 20.

Pour assurer une certaine homogénéité de qualité de fixation couvercle/ensemble de stockage sous toute la surface du couvercle 30, les génératrices de soudure 60 peuvent être perpendiculaires l'une par rapport à l'autre (cf. figures 4a, 4b, 4d à 4g et 5) de sorte à délimiter des quadrants.

Avantageusement, les cordons de soudure principaux 50, 51 et 50', 51' peuvent être disposés de sorte à ne pas chevaucher les génératrices de soudure 60.

Ceci permet de réduire les échauffements localisés de la barrette 40.

Dans les modes de réalisation les cordons de soudure principaux 50, 51 et 50', 51' sont disposés dans l'une 61 des quatre portions de couvercle 61, 62, 63, 64 délimitées par les génératrices de soudure 60, que ces quatre portions de couvercle 61, 62, 63, 64 soient ou non de surfaces égales.

Avantageusement, chacune des autres portions de couvercle 62, 63, 64 peut comprendre un ou plusieurs cordons de soudure supplémentaires respectifs 52, 53, 54. Ce cordon de soudure sera qualifié dans la suite de cordon de soudure secondaire.

Ceci permet d'améliorer la qualité de la liaison entre le couvercle 30 et la barrette 40.

Comme illustré aux figures 4a, 4e à 4g, et 5, chaque autre quadrant 61, 62, 63, 64 peut comprendre un cordon de soudure secondaire 52, 53, 54 de forme en quart de cercle disposé à la périphérie du couvercle 30.

Ceci permet de maximiser la longueur des cordons secondaires 52, 53,54.

Ces cordons de soudure secondaires 52, 53, 54 tels que montrés aux figures 4b à 4d et 4h peuvent également être rectilignes, parallèles, perpendiculaires ou formant un angle avec le plan B-B' pour les mêmes raisons que citées précédemment en référence aux cordons de soudure principaux 50, 51 et 50', 51'.

Dans un mode de réalisation illustré à la figure 6, chaque barrette 40 est constituée par une superposition de feuillards métalliques soudables par résistance, par exemple en aluminium. La superposition de feuillards est soudée par résistance point par point au niveau de points de soudage 41, 42, 43, 44. De préférence, ces points de soudage 41, 42, 43, 44 ne sont pas alignés avec les cordons de soudure et les génératrices de soudure.

La soudure de la barrette sur le couvercle peut être réalisée par soudure laser par transparence, par exemple le long de lamages disposés sur la barrette 40.

Une alternative au soudage par laser par transparence peut être le brasage-diffusion, par exemple par Gallium, de tout ou partie des surfaces de contact entre la barrette et les couvercles.

On notera avantageusement qu'une telle soudure des barrettes sur les couvercles des éléments, telle qu'elle est pratiquée selon l'invention décrite ci-dessus, permet de réaliser un module complet, soit avant les opérations d'imprégnation d'électrolyte des éléments, soit après ces opérations, si l'on a prévu que les couvercles et les barrettes possèdent des orifices d'imprégnation.

Le lecteur aura également compris que de nombreuses modifications peuvent être apportées au procédé et au dispositif décrit précédemment sans sortir matériellement des nouveaux enseignements et des avantages décrits ici.

Notamment, il est clair que l'on peut réaliser des connexions par barrettes selon l'invention sur les deux couvercles de chaque élément, et pas seulement sur le couvercle supérieur.

Par conséquent, toutes les modifications de ce type entrent dans la portée du module selon l'invention tel que défini dans les revendications jointes.

**Revendications**

1. Module comprenant au moins deux ensembles de stockage d'énergie électrique (20), chaque ensemble de stockage (20) comprenant une première face coiffée par un couvercle (30) connecté électriquement audit ensemble de stockage d'énergie (20) et une deuxième face opposée à la première face, chaque couvercle étant en contact avec une extrémité respective d'une barrette (40) pour connecter électriquement les deux ensembles de stockage (20), **caractérisé en ce que** la barrette (40) et les faces des couvercles (30) en contact avec la barrette (40) sont planes, la périphérie de la face plane de chaque couvercle étant dépourvue de bord s'étendant vers l'éxtérieur parallèlement à un axe de révolution de l'ensemble de stockage, la barrette (40) étant soudée sur les faces des couvercles (30) en contact avec la barrette le long de cordons de soudure (50, 50').

2. Module selon la revendication 1, **caractérisé en ce qu'**il comprend un boîtier (10) dans lequel sont disposés les ensembles de stockage (20).

3. Module selon l'une des revendications 1 ou 2, **caractérisé en ce que** chaque couvercle (30) comprend une borne de connexion (31) sur sa face externe en contact électrique avec une extrémité de la barrette (40) au niveau d'un alésage traversant de la barrette (40).

4. Module selon l'une des revendications 1 à 3, **caractérisé en ce que** les deux ensembles de stockage (20) et les cordons de soudure (50, 50') sont symétriques par rapport à un plan médian (A-A') disposé à mi-distance des axes de révolution des ensembles de stockage (20).

5. Module selon l'une des revendications 1 à 4, **caractérisé en ce que** les cordons de soudure (50, 50') des deux ensembles de stockage (20) sont disposés en regard l'un de l'autre.

6. Module selon l'une des revendications 1 à 4, **caractérisé en ce que** les cordons de soudure (50, 50') des deux ensembles de stockage (20) sont disposés à l'opposé l'un de l'autre.

7. Module selon l'une des revendications 1 à 6, **caractérisé en ce que** la barrette (40) est soudée sur la face d'un couvercle (30) en contact avec la barrette le long d'au moins un cordon de soudure (50, 50').

8. Module selon l'une des revendications 1 à 7, **caractérisé en ce que** chaque ensemble de stockage d'énergie (20) est connecté électriquement à la barrette (40) le long d'au moins deux cordons de soudure (50, 51 et 50', 51').

9. Module selon la revendication l'une des revendications 1 à 8, **caractérisé en ce que** les cordons de soudure (50, 51 et 50', 51') sont symétriques par rapport à un plan (B-B') passant par les axes de révolution des ensembles de stockage d'énergie (20).

10. Module selon l'une des revendications 1 à 9, **caractérisé en ce que** chaque cordon de soudure (50, 51 et 50', 51') est de forme en quart de cercle, un premier cordon de soudure (50, 50') s'étendant à la périphérie du couvercle (30) et un deuxième cordon de soudure (51, 51') s'étendant le long d'un rayon médian du couvercle (30).

11. Module selon l'une des revendications 1 à 9, **caractérisé en ce que** les deux cordons de soudure (50, 51 et 50', 51') sont rectilignes et s'étendent parallèlement au plan de symétrie (B-B') passant par les axes de révolution des deux ensembles de stockage (20).

12. Module selon la revendication 1 à 9, **caractérisé en ce que** les deux cordons de soudure (50, 51 et 50', 51') sont rectilignes et s'étendent perpendiculairement au plan B-B' de symétrie passant par les axes de révolution des ensembles de stockage.

13. Module selon la revendication 1 à 9, **caractérisé en ce que** les deux cordons de soudure (50, 51 et 50', 51') sont rectilignes et forment un angle avec le plan de symétrie (B-B') passant par les axes de révolution des deux ensembles de stockage (20).

14. Module selon l'une des revendications 1 à 13, **caractérisé en ce que** chaque ensemble de stockage (20) comprend un élément bobiné soudé au couvercle (30) le long d'au moins deux génératrices de soudure (60), les cordons de soudure (50, 51 et 50', 51') étant disposés de sorte à ne pas chevaucher les génératrices de soudure (60).

15. Module selon la revendication 14, **caractérisé en ce que** chaque ensemble de stockage (20) comprend au moins quatre génératrices de soudure (60) s'étendant radialement, chaque génératrice (60) formant un angle par rapport au plan de symétrie passant par les axes de révolution des ensembles de stockage (20).

16. Module selon la revendication 15, **caractérisé en ce que** les génératrices de soudure (60) s'étendant radialement sont symétriques deux à deux par rapport au plan de symétrie (B-B') passant par les axes de révolution des ensembles de stockage (20).

17. Module selon la revendication 14, **caractérisé en ce que** les génératrices de soudure (60) s'étendent le long de diamètres des couvercles (30).

18. Module selon la revendication 17, **caractérisé en ce que** les génératrices de soudure (60) sont perpendiculaires l'une par rapport à l'autre de sorte à délimiter des quadrants (61, 62, 63, 64).

19. Module selon la revendication 18, **caractérisé en ce que** pour chaque ensemble de stockage (20), les cordons de soudure (50, 51 et 50', 51') sont disposés dans un quadrant (61).

20. Module selon la revendication 19, **caractérisé en ce que** les autres quadrants (62, 63, 64) comprennent chacun un autre cordon de soudure (52, 53, 54).

21. Module selon la revendication 20, **caractérisé en ce que** les autres soudures (52, 53, 54) sont en forme de quart de cercle:

22. Module selon la revendication 20, **caractérisé en ce que** les autres cordons de soudure (52, 53, 54) sont rectilignes.

23. Module selon la revendication 22, **caractérisé en ce qu'**au moins deux autres cordons s'étendent perpendiculairement au plan passant par les axes de révolution des ensembles de stockage.

24. Module selon la revendication 23, **caractérisé en ce que** l'un des autres cordons de soudure s'étend dans le plan passant par les axes de révolution des ensembles de stockage.

25. Module selon la revendication 23, **caractérisé en ce que** au moins trois autres cordons s'étendent perpendiculairement au plan passant par les axes de révolution des ensembles de stockage.

26. Module selon l'une des revendications 1 à 25, **caractérisé en ce que** la barrette est soudée laser par transparence aux couvercles.

27. Module selon l'une des revendications 1 à 26, **caractérisé en ce que** le soudage de la barrette est effectué au travers de lamages.

28. Module selon l'une des revendications 1 à 25, **caractérisé en ce que** la barrette est soudée au couvercle par brasage diffusion sur toutes les surfaces de contact entre la barrette et les couvercles.

## Claims

1. A module comprising at least two electric energy storage assemblies (20), each storage assembly (20) comprising a first face topped by a cover (30) connected electrically to said energy storage assembly (20) and a second face opposite the first face, each cover being in contact with a respective end of a strip (40) to electrically connect the two storage assemblies (20),
   **characterised in that**
   the strip (40) and the faces of the covers (30) in contact with the strip (40) are planar, the periphery of the planar face of each cover being devoid of an edge and extending towards the exterior parallel to an axis of revolution of the storage assembly, the strip (40) being welded on the faces of the covers (30) in contact with the strip along welding beads (50, 50').

2. The module according to Claim 1, **characterised in that** it comprises a casing (10) in which the storage assemblies (20) are arranged.

3. The module according to any one of Claims 1 or 2, **characterised in that** each cover (30) comprises a connection terminal (31) on its external face in electrical contact with an end of the strip (40) at the level of a bore passing through the strip (40).

4. The module according to any one of Claims 1 to 3, **characterised in that** the two storage assemblies (20) and the welding beads (50, 50') are symmetrical relative to a median plane (A-A') arranged at mid distance from the axes of revolution of the storage assemblies (20).

5. The module according to any one of Claims 1 to 4, **characterised in that** the welding beads (50, 50') of the two storage assemblies (20) are arranged opposite one another.

6. The module according to any one of Claims 1 to 4, **characterised in that** the welding beads (50, 50') of the two storage assemblies (20) are arranged opposite one another.

7. The module according to any one of Claims 1 to 6, **characterised in that** the strip (40) is welded on the face of a cover (30) in contact with the strip along at least one welding bead (50, 50').

8. The module according to any one of Claims 1 to 7, **characterised in that** each energy storage assembly (20) is connected electrically to the strip (40) along at least two welding beads (50, 51 and 50', 51').

9. The module according to any one of Claims 1 to 8, **characterised in that** the welding beads (50, 51 and 50', 51') are symmetrical relative to a plane (B-B') passing through the axes of revolution of the energy storage assemblies (20).

10. The module according to any one of Claims 1 to 9, **characterised in that** each welding bead (50, 51 and 50', 51') is in the form of a quarter circle, a first welding bead (50, 50') extending to the periphery of the cover (30) and a second welding bead (51, 51') extending along a median radius of the cover (30).

11. The module according to any one of Claims 1 to 9, **characterised in that** the two welding beads (50, 51 and 50', 51') are rectilinear and extend parallel to the plane of symmetry (B-B') passing through the axes of revolution of the two storage assemblies (20).

12. The module according to any one of claims 1 to 9, **characterised in that** the two welding beads (50, 51 and 50', 51') are rectilinear and extend perpendicularly to the plane B-B' of symmetry passing through the axes of revolution of the storage assemblies.

13. The module according to any one of claims 1 to 9, **characterised in that** the two welding beads (50, 51 and 50', 51') are rectilinear and form an angle with the plane of symmetry (B-B') passing through the axes of revolution of the two storage assemblies (20).

14. The module according to any one of Claims 1 to 13, **characterised in that** each storage assembly (20) comprises a coil element welded to the cover (30) along at least two welding generatrices (60), the welding beads (50, 51 and 50', 51') being arranged so as not to overlap the welding generatrices (60).

15. The module according to Claim 14, **characterised in that** each storage assembly (20) comprises at least four welding generatrices (60) extending radially, each generatrix (60) forming an angle relative to the plane of symmetry passing through the axes of revolution of the storage assemblies (20).

16. The module according to Claim 15, **characterised in that** the welding generatrices (60) extending radially are symmetrical in pairs relative to the plane of symmetry (B-B') passing through the axes of revolution of the storage assemblies (20).

17. The module according to Claim 14, **characterised in that** the welding generatrices (60) extend along diameters of the covers (30).

18. The module according to Claim 17, **characterised in that** the welding generatrices (60) are perpendicular relative to one another so as to delimit quadrants (61, 62, 63, 64).

19. The module according to Claim 18, **characterised in that** for each storage assembly (20), the welding beads (50, 51 and 50', 51') are arranged in a quadrant (61).

20. The module according to Claim 19, **characterised in that** the other quadrants (62, 63, 64) each comprise another welding bead (52, 53, 54).

21. The module according to Claim 20, **characterised**

**in that** the other weldings (52, 53, 54) are in the form of a quarter circle.

22. The module according to Claim 20, **characterised in that** the other welding beads (52, 53, 54) are rectilinear.

23. The module according to Claim 22, **characterised in that** at least two other beads extend perpendicularly to the plane passing through the axes of revolution of the storage assemblies.

24. The module according to Claim 23, **characterised in that** one of the other welding beads extends in the plane passing through the axes of revolution of the storage assemblies.

25. The module according to Claim 23, **characterised in that** at least three other beads extend perpendicularly to the plane passing through the axes of revolution of the storage assemblies.

26. The module according to any one of Claims 1 to 25, **characterised in that** the strip is laser welded by transparency to the covers.

27. The module according to any one of Claims 1 to 26, **characterised in that** the welding of the strip is carried out via counterbores.

28. The module according to any one of Claims 1 to 25, **characterised in that** the strip is welded to the cover by diffusion brazing on all contact surfaces between the strip and the covers.


**Patentansprüche**

1. Modul, das wenigstens zwei Einheiten zur Speicherung elektrischer Energie (20) umfasst, wobei jede Speichereinheit (20) eine erste Seite umfasst, auf der ein Dekkel (30) sitzt, der mit der Energiespeichereinheit (20) elektrisch verbunden ist, sowie eine zweite Seite umfasst, die entgegengesetzt zur ersten Seite liegt, wobei jeder Deckel mit einem entsprechenden Ende eines Stegs (40) in Kontakt ist, um die beiden Speichereinheiten (20) elektrisch zu verbinden,
**dadurch gekennzeichnet, dass**
der Steg (40) und die Seiten der Deckel (30), die sich in Kontakt mit dem Steg (40) befinden, eben sind, wobei der Umfang der ebenen Seite jedes Deckels keinen Rand aufweist, der sich parallel zu einer Rotationssymmetrieachse der Speichereinheit nach außen erstreckt, und wobei der Steg (40) auf den Seiten der Deckel (30), die in Kontakt mit dem Steg sind, entlang von Schweißnähten (50, 50') verschweißt ist.

2. Modul nach Anspruch 1, **dadurch gekennzeichnet, dass** es ein Gehäuse (10) umfasst, in dem die Speichereinheiten (20) angeordnet sind.

3. Modul nach einem der Ansprüche 1 oder 2, **dadurch gekennzeichnet, dass** jeder Deckel (30) auf seiner äußeren Seite eine Anschlussklemme (31) umfasst, die in elektrischem Kontakt mit einem Ende des Stegs (40) steht, und dies im Bereich einer Durchgangsbohrung des Stegs (40).

4. Modul nach einem der Ansprüche 1 bis 3, **dadurch gekennzeichnet, dass** die zwei Speichereinheiten (20) und die Schweißnähte (50, 50') symmetrisch in Bezug auf eine Mittelebene (A-A') sind, die auf halber Strecke der Rotationssymmetrieachsen der Speichereinheiten (20) angeordnet ist.

5. Modul nach einem der Ansprüche 1 bis 4, **dadurch gekennzeichnet, dass** die Schweißnähte (50, 50') der zwei Speichereinheiten (20) einander gegenüberliegend angeordnet sind.

6. Modul nach einem der Ansprüche 1 bis 4, **dadurch gekennzeichnet, dass** die Schweißnähte (50, 50') der zwei Speichereinheiten (20) auf den einander abgewandten Seiten liegend angeordnet sind.

7. Modul nach einem der Ansprüche 1 bis 6, **dadurch gekennzeichnet, dass** der Steg (40) auf der Seite eines Deckels (30), die in Kontakt mit dem Steg ist, entlang wenigstens einer Schweißnaht (50, 50') verschweißt ist.

8. Modul nach einem der Ansprüche 1 bis 7, **dadurch gekennzeichnet, dass** jede Energiespeichereinheit (20) mit dem Steg (40) entlang wenigstens zweier Schweißnähte (50, 51 und 50', 51') elektrisch verbunden ist.

9. Modul nach einem der Ansprüche 1 bis 8, **dadurch gekennzeichnet, dass** die Schweißnähte (50, 51 und 50', 51') symmetrisch in Bezug auf eine Ebene (B-B') sind, die durch die Rotationssymmetrieachsen der Energiespeichereinheiten (20) verläuft.

10. Modul nach einem der Ansprüche 1 bis 9, **dadurch gekennzeichnet, dass** jede Schweißnaht (50, 51 und 50', 51') als Viertelkreis ausgebildet ist, wobei eine erste Schweißnaht (50, 50') sich am Umfangsrand des Dekkels (30) erstreckt und eine zweite Schweißnaht (51, 51') sich entlang eines mittleren Radius des Deckels (30) erstreckt.

11. Modul nach einem der Ansprüche 1 bis 9, **dadurch gekennzeichnet, dass** die zwei Schweißnähte (50, 51 und 50', 51') geradlinig sind und sich parallel zur Symmetrieebene (B-B') erstrecken, die durch die Rotationssymmetrieachsen der zwei Speichereinheiten (20) verläuft.

12. Modul nach einem der Ansprüche 1 bis 9, **dadurch gekennzeichnet, dass** die zwei Schweißnähte (50, 51 und 50', 51') geradlinig sind und sich senkrecht zur Symmetrieebene (B-B') erstrecken, die durch die Rotationssymmetrieachsen der Speichereinheiten verläuft.

13. Modul nach einem der Ansprüche 1 bis 9 , **dadurch gekennzeichnet, dass** die zwei Schweißnähte (50, 51 und 50', 51') geradlinig sind und mit der Symmetrieebene (B-B'), die durch die Rotationssymmetrieachsen der zwei Speichereinheiten (20) verläuft, einen Winkel bilden.

14. Modul nach einem der Ansprüche 1 bis 13, **dadurch gekennzeichnet, dass** jede Speichereinheit (20) ein gewickeltes Element umfasst, das entlang wenigstens zweier Schweißlinien (60) mit dem Deckel (30) verschweißt ist, wobei die Schweißnähte (50, 51 und 50', 51') derart angeordnet sind, dass sie nicht mit den Schweißlinien (60) überlappen.

15. Modul nach Anspruch 14, **dadurch gekennzeichnet, dass** jede Speichereinheit (20) wenigstens vier Schweißlinien (60) umfasst, die sich radial erstrekken, wobei jede Linie (60) in Bezug auf die Symmetrieebene, die durch die Rotationssymmetrieachsen der Speichereinheiten (20) verläuft, einen Winkel bildet.

16. Modul nach Anspruch 15, **dadurch gekennzeichnet, dass** die sich radial erstreckenden Schweißlinien (60) paarweise symmetrisch in Bezug auf die Symmetrieebene (B-B') sind, die durch die Rotationssymmetrieachsen der Speichereinheiten (20) verläuft.

17. Modul nach Anspruch 14, **dadurch gekennzeichnet, dass** die Schweißlinien (60) sich entlang von Durchmessern der Deckel (30) erstrecken.

18. Modul nach Anspruch 17, **dadurch gekennzeichnet, dass** die Schweißlinien (60) zueinander senkrecht sind, und dies derart, dass sie Quadranten (61, 62, 63, 64) abgrenzen.

19. Modul nach Anspruch 18, **dadurch gekennzeichnet, dass** für jede Speichereinheit (20) die Schweißnähte (50, 51 und 50', 51') in einem Quadranten (61) angeordnet sind.

20. Modul nach Anspruch 19, **dadurch gekennzeichnet, dass** von den anderen Quadranten (62, 63, 64) jeder eine weitere Schweißnaht (52, 53, 54) umfasst.

21. Modul nach Anspruch 20, **dadurch gekennzeichnet, dass** die weiteren Schweißstellen (52, 53, 54) in der Form von Viertelkreisen vorliegen.

22. Modul nach Anspruch 20, **dadurch gekennzeichnet, dass** die weiteren Schweißstellen (52, 53, 54) geradlinig sind.

23. Modul nach Anspruch 22, **dadurch gekennzeichnet, dass** wenigstens zwei weitere Nähte sich senkrecht zu der Ebene erstrecken, die durch die Rotationssymmetrieachsen der Speichereinheiten verläuft.

24. Modul nach Anspruch 23, **dadurch gekennzeichnet, dass** eine der weiteren Schweißnähte sich in der Ebene erstreckt, die durch die Rotationssymmetrieachsen der Speichereinheiten verläuft.

25. Modul nach Anspruch 23, **dadurch gekennzeichnet, dass** wenigstens drei weitere Nähte sich senkrecht zu der Ebene erstrecken, die durch die Rotationssymmetrieachsen der Speichereinheiten verläuft.

26. Modul nach einem der Ansprüche 1 bis 25, **dadurch gekennzeichnet, dass** der Steg mittels Laser-Durchstrahlschweißen auf dem Deckeln verschweißt wird.

27. Modul nach einem der Ansprüche 1 bis 26, **dadurch gekennzeichnet, dass** das Schweißen des Stegs durch Senkungen hindurch ausgeführt wird.

28. Modul nach einem der Ansprüche 1 bis 25, **dadurch gekennzeichnet, dass** der Steg durch Diffusionslöten auf allen Kontaktflächen zwischen dem Steg und den Deckeln auf dem Deckel verschweißt wird.

FIG.1

FIG.2a

FIG.2b

FIG.2

FIG.3

FIG.5

FIG.6

FIG.4a

FIG.4b

FIG.4c

FIG.4d

FIG.4e

FIG.4f

FIG.4g

FIG.4h

EP 2 198 472 B1

**EP 2 198 472 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1450422 A